# EUROPEAN PATENT APPLICATION

(11) **EP 0 778 065 A1**
(43) Date of publication of application: **11.06.1997**
(21) Application number: 96119558.3
(22) Date of filing: 05.12.1996
(51) Int. Cl.: B01D 46/00, B01D 53/04, B01J 20/34, B05B 15/12

(54) **Solvent adsorbing apparatus and recuperation using condensation**

(30) Priority: 07.12.1995 IT TO950977
(71) Applicant: 3 EFFE.GI S.r.l., 12080 Vicoforte (IT)
(72) Inventor: Freddato, Ferruccio, 12080 Vicoforte di Mondovi' (IT); Rovere, Fabrizio, 12100 Cuneo (IT); Icardi, Gianfranco, 15010 Morbello (IT)
(74) Representative: Jorio, Paolo, Dr. Ing.

(57) **Abstract**

Filter equipment (1) in which a container (14) defines a chamber (20) housing activated carbon filters (55) for absorbing an industrial solvent. The container (14) is provided with first and second shutter devices (22) interposed between the chamber (20) and an inlet (18) and an outlet (42) respectively. The first and second shutter devices (24,33) are movable between a normal operating position in which both of the shutter devices (24,33) are open and a flow of air polluted by solvents is established through the chamber (20) and a recovery position in which both of the shutter devices (24,33) are closed and a regeneration device (7) for regenerating the activated carbon filters is operative.

## Description

The present invention relates to filter equipment.

Filter devices, in particular activated carbon filter devices, are known which are adapted for installation in industrial environments in which the air is polluted with solid particles and vapours, particularly vapours of industrial solvents. Known filter devices include a container housing one or more activated carbon filters and a suction device, for example a centrifugal fan, arranged to cause the polluted air to be sucked in through an inlet of the container for supply to the filters which output purified air from the container. The activated carbon filters must be regenerated periodically to remove the solvents deposited in the filters themselves; to effect this operation, the filters must be withdrawn from the container and taken to suitable collecting centres in which the solvents are removed from the filters themselves. The regeneration steps take a long time and are also extremely burdensome since they include the removal and transport of the filters to specialised centres, and their regeneration at these centres.

The object of the present invention is to provide filter equipment in which the filters may be regenerated in situ without being removed.

This object is achieved by the present invention in that it relates to filter equipment of the type specified in Claim 1.

The invention will now be described with particular reference to the appended schematic drawing which shows filter equipment in accordance with the present invention.

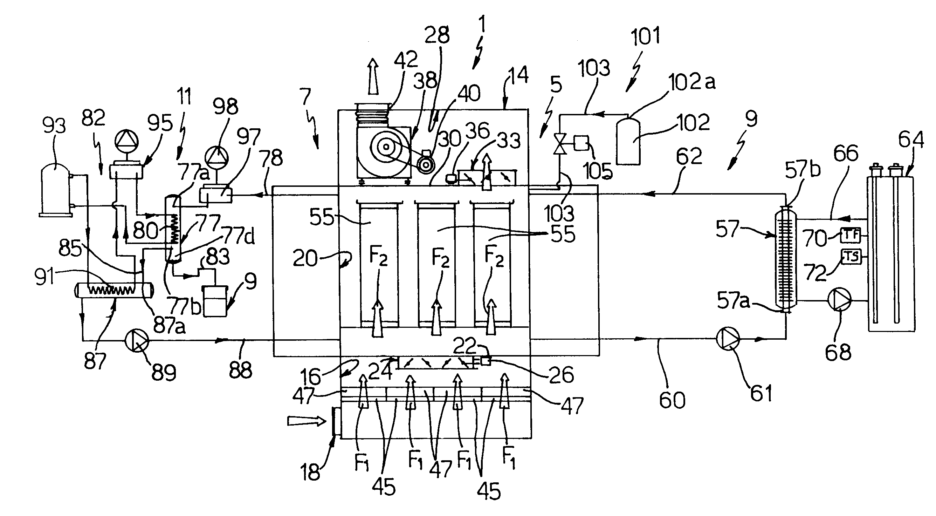

In the drawing, activated carbon filter equipment is shown generally indicated 1 and comprises an activated carbon filter unit 5 and a device 7 for regenerating the activated carbon including an assembly 9 for generating superheated air coupled to the filter unit 5 and a solvent recovery unit 11 coupled to the filter unit 5.

More particularly, the filter unit 5 comprises a metal container 14 of substantially parallelepipedal shape defining a first, lower parallelepipedal chamber 16 communicating with the exterior through an inlet duct 18 and a second, intermediate parallelepipedal chamber 20 overlying the chamber 16 and separated therefrom by a partition 22. The partition 22 also has an aperture (not shown) closed by a shutter device 24 with multiple slats operated by a servomotor 26. The shutter device 24 is movable between a closed position in which the chambers 16 and 20 are separated from each other and an open position in which the chambers 16, 20 communicate with each other through the shutter device 24. The container 14 also defines a third, upper parallelepipedal chamber 28 overlying the intermediate chamber 20 and separated therefrom by a partition 30 having an aperture (not shown) closed by a shutter device 33 with multiple slats operated by a servomotor 36. The shutter device 33 is movable between a closed position in which the chamber 20 is separated from the chamber 28 and an open position in which the chambers 20, 28 communicate with each other through the shutter device 33. The third chamber 28 houses a centrifugal fan 38 which is driven by an electric motor 40 and arranged to draw gas from within the upper chamber 28 and to expel this gas through an exhaust duct 42 which extends out of the container 14.

The lower parallelepipedal chamber 16 houses a plurality of regenerable pre-filters 45 located transverse the chamber 16 itself and arranged to intercept the flow F₁ of gas flowing from the inlet duct 18 to the shutter device 24. The lower parallelepipedal chamber 16 also houses a plurality of regenerable filters 47 facing the pre-filters 45 and arranged to receive the gas flow which passes through the pre-filters 45 themselves.

The second chamber 20 houses a plurality of activated carbon filters 55 (three in the embodiment illustrated) arranged to intercept the gas flow F₂ flowing through the chamber 20 from the shutter device 24 to the shutter device 33.

The superheated-air generating assembly 9 includes an air/oil heat exchanger 57 which has an inlet 57a communicating with the second chamber 20 through an inlet duct 60 incorporating an electric fan 61 and an outlet 57b communicating with the chamber 20 through a duct 62 for supplying superheated air. The electric fan 61 is arranged to convey the air taken from a lower portion of the chamber 20 through the heat exchanger 57, where the air is heated strongly (up to about 130°C), and then to re-emit it into the chamber 20 through the duct 62. The assembly 9 further includes an electric boiler 64 which supplies hot oil under pressure to the exchanger 57 through an inlet duct 66; the electric boiler 64 is also connected to an electric pump 68 which supplies the boiler 64 itself with the oil leaving the heat-exchanger 57. The boiler 64 also has a thermostat 70 for regulating the oil temperature and a safety thermostat 72 for deactivating the boiler 64 should a maximum threshold temperature be exceeded.

The recovery unit 11 includes a heat exchanger 77 having an inlet 77a connected to the chamber 20 through an inlet duct 78 and housing a cooling coil 80 of a refrigerating system 82. The heat exchanger 77 is adapted to cool the gases supplied to it through the duct 78 so as to cause the condensation of at least some of these gases which are deposited in liquid form in a lower portion 77d of the heat exchanger 77 itself; more particularly, the heat exchanger 77 has an exhaust duct 83 for the discharge of the liquefied gases.

The heat exchanger 77 has an outlet 77b which communicates through a duct 85 with the inlet 87a of a heat exchanger 87 which in turn has an outlet 87b communicating with the second chamber 20 through a duct 88 incorporating an electric fan 89. The heat exchanger 87 houses a heating coil 91 of the refrigerating system 82. More particularly, the refrigerating system 82 (of known type) includes a compressor 93 for compressing a working fluid (conveniently the gas R22 or R134) in the coil 91 so as to heat the coil 91 itself; this compressed gas is subsequently supplied to a finned gas-air exchange condenser 95 and thence to the coil 80 where the gas itself expands with the consequent cooling of the coil 80. The recovery unit 11 further includes a finned air-air exchange condenser 97 interposed in the inlet duct 78 and coupled to an electric fan 98; the finned condenser 97 acts to lower the temperature of the gases drawn into the duct 78. The equipment 1 further includes an inert gas supply device 101 for supplying a flow of inert gas (for example nitrogen, carbon dioxide, etc..)to the parellelepipedal chamber 20. The device 101 includes a pressurised gas container 102 having an outlet 102a communicating with the chamber 20 through a tube 103 and a solenoid valve 105 associated with the tube 103.

In use, the filter equipment 1 may, to advantage, be installed in an industrial environment (not illustrated), for example a room in which painting equipment is installed and in which the air is polluted by industrial solvent vapours (for example toluol, toluene, xylol, xylene, etc..) and solid particles. More particularly, the equipment 1 may, to advantage, be installed in a painting booth (not illustrated).

The equipment 1 normally operates a filter cycle in which polluted air is drawn in and purified air is expelled into the industrial environment. During this filter cycle, both of the shutter devices 24 and 33 are open, the solenoid valve 105 is closed, the electric motor 40 is operational, the electric boiler 64 is deactivated and the refrigerating system 82 is switched off.

The polluted air in the industrial environment (not illustrated) or in the painting booth (not illustrated) is drawn in through the duct 18 and introduced into the lower chamber 16 where a primary purification of the air occurs by means of the pre-filters 45 and the filters 47 which absorb the solid particles in the polluted air. The polluted air then enters the intermediate chamber 20 through the shutter device 24 and reaches the activated carbon filters 55 which absorb the solvents in the polluted air; for this reason the air which is drawn into the upper chamber 28 by the centrifugal fan 38 and subsequently expelled through the exhaust duct 42 is substantially free from solvents (purified air).

After a predetermined number of hours of operation, the activated carbon filters 55 have absorbed a large quantity of solvent and must then be regenerated.

For this purpose the equipment 1 operates a regenerating cycle in which both of the shutter devices 24 and 33 are closed, the electric motor 40 is switched off, the electric boiler 64 is activated and the refrigerating system 82 is switched on.

The air in the intermediate chamber 20 is withdrawn by the electric fan 61 and supplied to the heat exchanger 57 which returns it to the intermediate chamber 20 as superheated air. The introduction of superheated air into the chamber 20 heats the filters 55 and causes the solvent in the filters 55 themselves to evaporate; the mixture of solvent vapours and air is drawn into the duct 78 ( by the electric fan 89) and is supplied to the condenser 97 where this gaseous mixture undergoes primary cooling. The gaseous mixture is then supplied to the heat exchanger 77 where it is cooled strongly to cause condensation of the solvent which is deposited in liquid form in the lower portion 77d of the heat exchanger 77. The liquid solvent may be drawn off from the heat exchanger 77 through the duct 83 and poured into a container 99. The gas which leaves the heat exchanger 77 (comprising air almost completely free of solvents) is subsequently pre-heated in the heat exchanger 87 and supplied to the chamber 20. Thus the heat generated in the refrigerating system 82 is not dissipated but is used to preheat the gas supplied to the chamber 20, improving the thermal efficiency of the equipment 1. During the regenerating cycle, the solenoid valve 105 may be opened to supply the chamber 20 with a flow of inert gas which mixes with the solvent vapours in order to prevent any exothermic reactions in the chamber 20.

From the above the advantages of the present invention will be clear in that the regeneration of the activated carbon filters is carried out entirely automatically and without the removal of the filters themselves. The equipment 1 thus achieves a great saving (in that the operations of removing, transporting and regenerating the filters are no longer necessary) and the solvent is recovered and may be reused. The equipment 1 also has little bulk, is cheap to run and highly efficient.

Finally it is clear that modifications and variations may be made to the filter equipment described without thereby departing from the protective scope of the present invention.

## Claims

1. Filter equipment characterised in that it includes:
- container means (14) defining at least one main chamber (20) for housing activated carbon filter means (55) for absorbing a substance, particularly an industrial solvent;
- first shutter means (22) interposed between the main chamber (20) and an inlet (18) of the container means (14);
- second shutter means (33) interposed between the main chamber (20) and a discharge outlet (42) of the container means (14);
- main suction means (38,40) for creating a flow from the inlet (18) to the outlet (42) through the main chamber (20) when activated;
- regenerating means (7) for regenerating the filter means by causing substances deposited in the filter means (55) to evaporate; the regenerating means (7) also being operable to cause condensation and at least partial recovery of the evaporated substances;
the first and second shutter means (24,33) being movable between a filter position in which both of the shutter means (24,33) are open and the said flow in which the substance is absorbed by the filter means (55) is established, and a regenerating position in which both of the shutter means (24,33) are closed and the regenerating means (7) are activated.

2. Equipment according to Claim 1, characterised in that the regenerating means (7) comprise:
- flow generating means (9) communicating (60,62) with the main chamber (20) and adapted to supply (62) the main chamber (20) with a flow of heating gas:
- recovery means (11) communicating (78) with the main chamber (20) and including means (89) adapted to draw from the main chamber a mixture of gases including the substance evaporated from the filter means (55); the recovery means (11) including at least condenser means (77) which receives the gaseous mixture at its input and is adapted to cool the mixture and liquify at least some of the said substance therein.

3. Equipment according to Claim 2, characterised in that the flow-generating means (9) comprise:
- a first air/working fluid heat exchanger (57) having its inlet (57a) connected to the main chamber and an outlet (57b) communicating with the main chamber (20);
heater means (64) for heating the working fluid cooperating with the heat exchanger (57); and
first fan means (61) for driving the heating flow from the first heat exchanger (57) to the main chamber (20).

4. Equipment according to Claim 2 or Claim 3, characterised in that the recovery means (11) comprise:
- a second heat exchanger (77) the input (78) of which communicates with the main chamber (20):
- a third heat exchanger (87) having an input (87a) connected to the output (77b) of the second heat exchanger (77); the third heat exchanger (87) having an output (87b) communicating (8) with the main chamber (20);
a refrigerating system (82) including a refrigerating unit (80) coupled to the second heat exchanger (77) and
a heating unit (91) coupled to the third heat exchanger (87); and
- second fan means (89) for establishing a flow of gaseous mixture from the main chamber to the second heat exchanger (77).

5. Equipment according to Claim 4, characterised in that it includes pre-cooling means (97) interposed between the main chamber (20) and the second heat exchanger (77).

6. Equipment according to any one of the preceding claims, characterised in that the container means (14) define an auxiliary chamber (16) communicating with the main chamber (20) through the first shutter means (24) and communicating with the said inlet (18);
the auxiliary chamber (16) housing pre-filter means (45) for absorbing the solid particles present in the gas drawn into the auxiliary chamber (16).

7. Equipment according to any one of the preceding claims, characterised in that it includes inert gas supply means (101) for supplying a flow of inert gas to the main chamber (20) when activated.
